# EUROPEAN PATENT SPECIFICATION

(11) **EP 2 832 421 B1**
(45) Date of publication and mention of the grant of the patent: **25.05.2016**
(21) Application number: 13178475.3
(22) Date of filing: 30.07.2013
(51) Int. Cl.: B01D 53/22, B01D 63/06, B01D 63/08, C25B 15/08

(54) **PROCESS FOR PRODUCING HIGH PURITY CO BY MEMBRANE PURIFICATION OF SOEC-PRODUCED CO**
VERFAHREN ZUR HERSTELLUNG VON HOCHREINEM CO DURCH MEMBRANENREINIGUNG VON SOEC-ERZEUGTEM CO
PROCÉDÉ DE PRODUCTION DE CO D'UNE GRANDE PURETÉ PAR PURIFICATION DE MEMBRANE DE CO PRODUITE PAR SOEC

(43) Date of publication of application: 04.02.2015
(73) Proprietor: Haldor Topsøe A/S, 2800 Kgs. Lyngby (DK)
(72) Inventor: Jakobsson, Niklas Bengt, 26023 Kågeröd (SE); Friis Pedersen, Claus, 2720 Vanløse (DK)
(74) Representative: Haldor Topsøe A/S

(56) References cited:
- WO-A1-00/68146
- US-A- 5 306 427
- US-A1- 2011 253 551
- EBBESEN S D ET AL: "Electrolysis of carbon dioxide in Solid Oxide Electrolysis Cells", JOURNAL OF POWER SOURCES, ELSEVIER SA, CH, vol. 193, no. 1, 1 August 2009 (2009-08-01), pages 349-358, XP026150424, ISSN: 0378-7753, DOI: 10.1016/J.JPOWSOUR.2009.02.093 [retrieved on 2009-03-19]

## Description

The present invention relates to a process for producing high purity carbon monoxide (CO) by membrane purification of CO produced in a solid oxide electrolysis cell (SOEC).

A solid oxide electrolysis cell is a solid oxide fuel cell (SOFC) run in reverse mode, which uses a solid oxide or ceramic electrolyte to produce e.g. oxygen and hydrogen gas by electrolysis of water. It can also be used to produce CO from carbon dioxide (CO₂), which is led to the fuel side of the SOEC or SOEC stack with an applied current. Excess oxygen is transported to the oxygen side of the SOEC, optionally using air, nitrogen or CO₂ to flush the oxygen side, and afterwards the product stream from the SOEC, containing CO mixed with CO₂, is subjected to a separation process.

Carbon monoxide of high purity is an important raw material for the synthesis of chemicals. Most reactions for the synthesis of chemicals require high temperatures as well as high pressures, and therefore the CO used should have the lowest possible content of carbon dioxide (CO₂) which corrodes the reactor by oxidation. Additionally, CO₂ may limit the equilibrium conversion of the reaction in which the produced CO takes part. CO₂ may also inhibit the kinetics of the reaction where CO is used.

Production of high purity CO is described in a number of patent publications. Thus, US 5,482,539 describes a multiple stage semi-permeable membrane process and apparatus for gas separation. This patent, however, does not deal with CO produced in electrolysis cells.

US 6,787,118 is related to selective removal of CO. More specifically it deals with catalyst compositions useful for destruction of volatile organic carbon compounds (VOCs) in an oxygen-containing gas stream at low temperatures and for selective oxidation of carbon monoxide from a hydrogencontaining gas. This patent is not related to any use of membranes.

US 2009/0014336 concerns electrolysis of carbon dioxide in aqueous media to carbon monoxide and hydrogen for production of methanol. However, this patent application is neither related to CO production using SOECs nor to the use of membranes.

A system wherein a membrane unit is coupled to the exit of an electrolysis cell is disclosed in US 5,814,127. This patent concerns the production of aluminum in an aluminum electrolysis cell and the subsequent removal of inorganic fluorides from the vent gas in the membrane unit, where the gas is split into a retentate stream rich in fluorides and a permeate stream depleted in fluorides. This has nothing to do with purification of CO, but the system resembles the one used in the present invention.

Finally, both EP 0 129 444 and US 4,539,020 concern high-purity CO obtained by pressure swing adsorption (PSA).

In fact, pressure swing adsorption (PSA) is the only known technology, which in an economically feasible way is able to purify CO to a purity of 95 % and above from a mixture of CO and CO₂ in the scale applicable to "small scale CO", i.e. a CO production of 1 to 200 Nm³/h. Only a very limited number of producers can supply PSA units in this scale. Besides, the PSA unit adds a significant complexity and cost to the smaller units. For these reasons it would be desirable to find a feasible alternative to PSA for the purification of CO produced in small scale.
Installing a membrane separation unit downstream from the SOEC is an attractive alternative to PSA, mainly due to its simplicity, because a membrane separation unit operates without any moving parts, but also due to a reduced capital expenditure (CAPEX) because of its modular nature.

Gas separation membranes are presently used for the removal of CO₂ from natural gas and syngas. Such membranes can be based on polymers or zeolites coated on alumina tubes, and they generally have a selectivity towards transporting CO₂ through the membrane, whereas hydrocarbons, H₂ and CO are held back on the retentate side. Typical selectivity constants for CO/CO₂ are between 5 and 20, and fluxes may vary from 20 to 200 Nm³/h per m² membrane area.

Ebbesen et al. describe in "Electrolysis of carbon dioxide in Solid Oxide Electrolysis Cells" in JOURNAL OF POWER SOURCES, ELSEVIER SA, CH, vol. 193, no. 1, 1 August 2009, pages 349-358, a process for producing carbon monoxide using a solid oxide electrolysis cell (SOEC). Membrane separation is driven by the difference in partial pressure, and thus it is most suitable for removing the bulk of an impurity, such as CO₂, whereas an extensive membrane area is required to reach a high purity when the driving force for separation decreases.

All membranes that have a difference in permeability for CO and for CO₂, where the permeability of the membrane is higher for CO₂ than that for CO, can be used in the present invention. These criteria are met with ceramic membranes, coated ceramic membranes and polymeric membranes. The membranes may be of planar or tubular shape, and they may be used in a single membrane unit or in multiple membrane units in series or in parallel.

The driving force for separation can be boosted by applying a high absolute pressure on the retentate side of the membrane and applying an approximate vacuum on the permeate side of the membrane. In practice, however, there is a CAPEX limitation for installing a multi-stage compressor to reach a high pressure and the power required to drive the compressor. The maximum pressure difference is also limited by the mechanical strength of the membrane and of the membrane module.

The present invention relates to a selective separation of CO from a mixture of CO and CO₂, especially in relation to small scale production of CO by SOEC electrolysis. The principle is quite similar to a reflux column within distillation.

More specifically the invention concerns a process for producing high purity carbon monoxide (CO) by membrane purification of CO produced in a solid oxide electrolysis cell (SOEC), said process comprising the following steps:
(1) generating a gaseous mixture of CO and CO₂ by SOEC electrolysis of CO₂,
(2) applying a moderate pressure on the retentate side of the membrane in a membrane unit connected to the exit of the SOEC via a compressor or an ejector,
(3) applying a lower pressure than the pressure in step (2) on the permeate side of the membrane,
(4) splitting the retentate stream, which is now enriched in CO, into two separate parts,
(5) expanding the first part of the retentate stream to reach the permeate low pressure conditions,
(6) leading the above-mentioned part of the retentate to the permeate side of the membrane to lower the partial pressure of CO₂ on this side, and
(7) recycling the outlet permeate stream back to the SOEC as a feed gas together with fresh CO₂.

By lowering the partial pressure of CO₂ on the permeate side of the membrane in the above step (6), the driving force for CO₂ flux through the membrane is increased. In addition, the driving force for transportation of CO through the membrane is decreased, and thus the yield of CO can be increased when high purities of CO are targeted. The outlet permeate stream is fully or partly recycled back to the SOEC as a feed gas together with fresh CO₂ in the above step (7), whereby the CO₂ yield is increased.

Regarding the moderate pressure on the retentate side of the membrane, it can be from 250 bar g down to 3 bar g, preferably from 175 bar g down to 3 bar g, more preferably from 40 bar g down to 3 bar g and most preferably from 20 bar g down to 5 bar g.

The lower pressure on the permeate side of the membrane can be between -0.8 bar g and 50 bar g, preferably between -0.8 bar g and 10 bar g, more preferably between -0.8 bar g and 3 bar g, even more preferably between -0.8 and 2 bar g and most preferably between -0.3 bar g and 0.5 bar g, especially between 0 and 0.3 bar g.

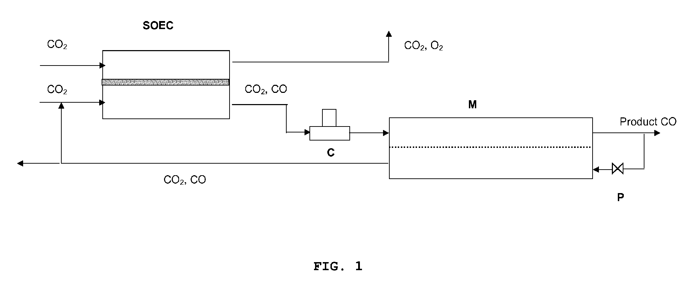

Regarding the analogy to distillation as mentioned above, the splitting of the retentate stream into two separate parts also has analogy to the reflux at the top of a distillation column. Furthermore, the SOEC unit has a function similar to the reboiler in a distillation unit; see the appended fig 1.

The membrane unit is preferably designed with a tubular membrane or multiple planar membranes connected in series where the retentate and permeate streams are operated in counter-current mode. This implies that the enriched CO reflux stream from the retentate side enters (after expansion) the permeate side of the membrane unit in the opposite end from the feed gas entering the membrane unit from the SOEC unit.

The process according to the invention can be further outlined with reference to fig. 1, which shows a solid oxide electrolysis cell (SOEC) unit with the oxygen side at the top, the electrolyte in the middle and the fuel side at the bottom. CO₂ is led to the fuel side of the SOEC unit with an applied current to convert CO₂ to CO and transport any oxygen surplus to the oxygen side of the SOEC unit. CO₂ is also led to the oxygen side to flush this side, but air or nitrogen may also be used for this purpose. Flushing the oxygen side of the SOEC unit has two advantages, more specifically (1) to reduce the oxygen concentration and related corrosive effects and (2) to provide means for feeding energy into the SOEC unit, operating it endothermic.

The product stream from the SOEC contains mixed CO and CO₂, which is led to a compressor C, which serves to establish a high absolute pressure on the retentate side of the membrane. A lower pressure is applied on the permeate side of the membrane by leading part of the CO product stream through a pressure reduction valve P and into the permeate side of the membrane.

## Claims

1. A process for producing high purity carbon monoxide (CO) by membrane purification of CO produced in a solid oxide electrolysis cell (SOEC), said process comprising the following steps:
(1) generating a gaseous mixture of CO and CO₂ by SOEC electrolysis of CO₂,
(2) applying a moderate pressure on the retentate side of the membrane in one or more membrane units connected to the exit of the SOEC via a compressor or an ejector,
(3) applying a lower pressure than the pressure in step (2) on the permeate side of the membrane,
(4) splitting the retentate stream, which is now enriched in CO, into two separate parts,
(5) expanding the first part of the retentate stream to reach the permeate low pressure conditions,
(6) leading the above-mentioned part of the retentate to the permeate side of the membrane to lower the partial pressure of CO₂ on this side, and
(7) recycling the outlet permeate stream back to the SOEC as a feed gas together with fresh CO₂.

2. The process according to claim 1, wherein the membrane is selected from the group consisting of ceramic membranes, coated ceramic membranes, such as zeolite coated membranes, and polymeric membranes.

3. The process according to claim 1 or 2, wherein the membrane unit is designed with a tubular membrane or multiple planar membranes connected in series, and wherein the retentate and permeate streams are operated in counter-current mode.

4. The process according to any of claims 1 - 3, wherein the moderate pressure in step (2) is from 250 bar g down to 3 bar g, preferably from 175 bar g down to 3 bar g.

5. The process according to claim 4, wherein the moderate pressure in step (2) is from 40 bar g down to 3 bar g and preferably from 20 bar g down to 5 bar g.

6. The process according to any of claims 1 - 3, wherein the lower pressure in step (3) is between -0.8 bar g and 50 bar g, preferably between -0.8 bar g and 10 bar g.

7. The process according to claim 6, wherein the lower pressure in step (3) is between -0.8 bar g and 3 bar g, preferably between -0.8 and 2 bar g.

8. The process according to claim 7, wherein the lower pressure in step (3) is between -0.3 bar g and 0.5 bar g, preferably between 0 and 0.3 bar g.

## Patentansprüche

1. Verfahren zur Herstellung von hochreinem Kohlenmonoxid (CO) durch Membranreinigung von in einer Festoxid-Elektrolysezelle (SOEC) erzeugtem CO, wobei das Verfahren die folgenden Schritte umfasst:
(1) Erzeugen einer gasförmigen Mischung aus CO und CO₂ durch SOEC Elektrolyse von CO₂,
(2) Anwenden eines moderaten Drucks auf der Retentat-Seite der Membran in einer oder mehreren Membraneinheiten, die mit dem Ausgang der SOEC über einen Kompressor oder einen Ejektor verbunden sind.
(3) Anwenden eines geringeren Drucks als dem Druck in Stufe (2) auf der Permeat-Seite der Membran,
(4) Aufteilen der Retentatstroms, der nun mit CO angereichert ist, in zwei separate Teile,
(5) Expandieren des ersten Teils des Retentatstroms, um Permeat-Niederdruckbedingungen zu erreichen,
(6) Führen des oben erwähnten Retentat-Teils zu der Permeat-Seite der Membran um den Partialdruck von CO₂ auf dieser Seite zu erniedrigen, und
(7) Rückführen des Permeat-Auslassstroms zurück in die SOEC als Speisegas zusammen mit frischem CO₂.

2. Verfahren gemäß Anspruch 1, wobei die Membran aus der Gruppe ausgewählt ist, bestehend aus Keramikmembranen, beschichteten Keramikmembranen, wie Zeolith beschichteten Membranen, und Polymermembranen.

3. Verfahren gemäß Anspruch 1 oder 2, wobei die Membraneinheit mit einer rohrförmigen Membran oder mehreren, in Serie verbunden, planaren Membranen ausgegestatett ist, und wobei die Retentat- und Permeat-Ströme im Gegenstrommodus betrieben werden.

4. Verfahren gemäß einem der Ansprüche von 1 - 3, wobei der moderate Druck im Schritt (2) von 250 bar g bis hinunter zu 3 bar g beträgt, vorzugsweise von 175 bar g bis hinunter zu 3 bar g.

5. Verfahren gemäß Anspruch 4, wobei der moderate Druck im Schritt (2) von 40 bar g bis hinunter zu 3 bar g und vorzugsweise von 20 bar g bis hinunter zu 5 bar g beträgt.

6. Verfahren gemäß einem der Ansprüche von 1 bis 3, wobei der niedrigere Druck im Schritt (3) zwischen - 0,8 bar g und 50 bar g, vorzugsweise zwischen - 0,8 barg und 10 barg beträgt.

7. Verfahren gemäß Anspruch 6, wobei der niedrigere Druck im Schritt (3) zwischen - 0,8 bar g und 3 bar g, vorzugsweise zwischen -0,8 und 2 bar g beträgt.

8. Verfahren gemäß Anspruch 7, wobei der niedrigere Druck im Schritt (3) zwischen -0,3 bar g und 0,5 bar g, vorzugsweise zwischen 0 und 0,3 bar g beträgt.

## Revendications

1. Procédé de production de monoxyde de carbone (CO) d'une grande pureté par purification sur membrane de CO produit dans une cellule d'électrolyse à oxyde solide (SOEC), ledit procédé comprenant les étapes suivantes:
(1) la génération d'un mélange gazeux de CO et de CO₂ par électrolyse par SOEC du CO₂,
(2) l'application d'une pression modérée sur le côté rétentat de la membrane dans une ou plusieurs unités de membrane reliées à la sortie de la SOEC par l'intermédiaire d'un compresseur ou d'un éjecteur,
(3) l'application d'une pression inférieure à la pression de l'étape (2) sur le côté perméat de la membrane,
(4) la division du courant de rétentat, qui est maintenant enrichi en CO, en deux parties distinctes,
(5) l'expansion de la première partie du courant de rétentat pour atteindre les conditions de basse pression du perméat,
(6) la conduite de la partie du rétentat mentionnée ci-dessus vers le côté perméat de la membrane pour abaisser la pression partielle de CO₂ de ce côté, et
(7) le recyclage du courant de perméat de sortie vers la SOEC sous la forme d'un gaz d'alimentation conjointement à du CO₂ frais.

2. Procédé selon la revendication 1, dans lequel la membrane est choisie dans le groupe constitué par des membranes céramiques, des membranes de céramique revêtues, telles que des membranes revêtues de zéolite, et des membranes polymères.

3. Procédé selon la revendication 1 ou 2, dans lequel l'unité de membrane est conçue avec une membrane tubulaire ou plusieurs membranes planes reliées en série, et dans lequel les courants de rétentat et de perméat fonctionnent selon un mode à contre-courant.

4. Procédé selon l'une quelconque des revendications 1 à 3, dans lequel la pression modérée à l'étape (2) est de 250 bars g jusqu'à 3 bars g, de préférence de 175 bars g jusqu'à 3 bars g.

5. Procédé selon la revendication 4, dans lequel la pression modérée à l'étape (2) est de 40 bars g jusqu'à 3 bars g et de préférence de 20 bars g jusqu'à 5 bars g.

6. Procédé selon l'une quelconque des revendications 1 à 3, dans lequel la pression inférieure à l'étape (3) est comprise entre -0,8 bar et 50 bars g g, de préférence entre -0,8 bar g et 10 bars g.

7. Procédé selon la revendication 6, dans lequel la pression inférieure à l'étape (3) est comprise entre -0.8 bar g et 3 bars g, de préférence entre -0,8 et 2 bars g.

8. Procédé selon la revendication 7, dans lequel la pression inférieure à l'étape (3) est comprise entre -0,3 bar g et 0,5 bar g, de préférence entre 0 et 0,3 bar g.
